# EUROPÄISCHE PATENTANMELDUNG

(11) **EP 3 085 563 A1**
(43) Veröffentlichungstag der Anmeldung: **26.10.2016**
(21) Anmeldenummer: 16166191.3
(22) Anmeldetag: 20.04.2016
(51) Int. Cl.: B60J 10/265, B60J 10/25, B60J 10/16, B60J 10/70, B60R 13/06

(54) **SPRITZGEGOSSENE WASSERABLAUFLEISTE UND ANORDNUNG FÜR EINE FAHRZEUGVERKLEIDUNG**

(30) Priorität: 20.04.2015 DE 202015101955 U
(71) Anmelder: SLM Kinststofftechnik GmbH, 39646 Oebisfelde (DE)
(72) Erfinder: Brüsch, Thomas, 38446 Wolfsburg (DE)
(74) Vertreter: Bittner, Thomas L.

(57) **Zusammenfassung**

Die Erfindung betrifft eine spritzgegossene Wasserablaufleiste für eine Fahrzeugverkleidung mit einem spritzgegossenem Trägerbauteil (2) und einer Dichtlippe (3), die an das Trägerbauteil (2) angespritzt ist, wobei eine sichtseitige Leistendeckfläche (6) mit einer Glanzoberfläche gebildet ist. Weiterhin betrifft die Erfindung eine Anordnung für eine Fahrzeugverkleidung.

## Beschreibung

Die Erfindung betrifft eine spritzgegossene Wasserablaufleiste sowie eine Anordnung für eine Fahrzeugverkleidung.

### Hintergrund

Als Bestandteil einer äußeren Verkleidung bei Fahrzeugen können Wasserablaufleisten oder Wasserfangleisten vorgesehen sein, insbesondere am Rand der Frontscheibe im Bereich der sogenannten A-Säule, die dazu dienen, auf die Frontscheibe gelangendes Wasser gezielt ablaufen zu lassen. Bei bekannten Wasserabtaufleisten ist die sichtseitige Leistendeckfläche auf einem Gummimaterial ausgebildet. Eine solche Oberfläche wird hinsichtlich des äußeren Eindrucks des Fahrzeugs als Nachteilig empfunden.

Aus dem Dokument DE 2 659 262 A1 ist eine Randabdeckung für feststehende Fensterscheiben bekannt, insbesondere für die Front- und Heckscheiben von Kraftfahrzeugen. Die Randabdeckung ist mit einem als Kunststoff-Spritzgussteil ausgebildeten Profilrahmen gebildet.

Im Dokument DE 10 2006 054 248 A1 ist eine Halteleiste zum Anbringen an der A-Säule eines Kraftfahrzeugs und zur Befestigung / Aufnahme einer Wasserfangleiste offenbart, wobei die Halteleiste mindestens einen Abschnitt aufweist, der lösbar mit der Wasserfangleiste verbindbar ist. Die Halteleiste weist einen Y-förmigen Querschnitt auf, dessen eine Schenkellänge über die Länge der Halteleiste variiert.

Aus dem Dokument DE 81 23 350 U1 ist eine Profilleiste aus Kunststoff oder Gummi zum Einfassen einer mittels Kleben am Fensterrahmen eines Fahrzeugs zu befestigenden Glasscheibe bekannt.

Im Dokument DE 38 88 910 T2 sind ein Fensterdichtungsprofil und ein Herstellungsverfahren beschrieben.

### Zusammenfassung

Es ist Aufgabe der Erfindung, eine spritzgegossene Wasserablaufleiste für eine Fahrzeugverkleidung sowie eine Anordnung für eine Fahrzeugverkleidung anzugeben, bei denen das sichtseitige Erscheinungsbild der Wasserablaufleiste verbessert ist.

Zur Lösung sind eine spritzgegossene Wasserablaufleiste sowie eine Anordnung für eine Fahrzeugverkleidung nach den unabhängigen Ansprüchen 1 und 11 vorgeschlagen. Ausgestaltungen sind Gegenstand von abhängigen Unteransprüchen.

Nach einem Aspekt ist eine spritzgegossene Wasserablaufleiste für eine Fahrzeugverkleidung geschaffen, die ein spritzgegossenes Trägerbauteil und eine an das Trägerbauteil angespritzte Dichtlippe aufweist, wobei eine sichtseitige Leistendeckfläche mit einer Glanzoberfläche gebildet ist.

Nach einem weiteren Aspekt ist eine Anordnung für eine Fahrzeugverkleidung mit einer spritzgegossenen Wasserablaufleiste geschaffen. Die Anordnung weist weiterhin ein Fahrzeugverkleidungsbauteil sowie ein Befestigungsbauteil auf, mit dem die spritzgegossene Wasserablaufleiste an dem Fahrzeugverkleidungsbauteil befestigt ist, bei der eine Glanzoberfläche einer Leistendeckfläche der spritzgegossenen Wasserablaufleiste sichtseitig angeordnet ist.

Die Glanzoberfläche kann zum Beispiel auch als mattglänzende Oberfläche ausgeführt sein. Alternativ kann beispielweise das Ausbilden einer Hochglanzoberfläche im Bereich der sichtseitigen Leistendeckfläche vorgesehen sein.

Es kann vorgesehen sein, Materialien mit einem Tiefenglanzeffekt zu verarbeiten.

Die Verwendung der spritzgegossenen Wasserablaufleiste kann das Fahrzeug aufwerten oder hochwertiger aussehen lassen.

Die Dichtlippe ist einstückig an das Trägerbauteil angeformt. Für das spritzgegossene Trägerbauteil und die spritzgegossene Dichtlippe kommen materialverträgliche Werkstoffe zum Einsatz, sodass beim Anspritzen der Dichtlippe eine haftende Verbindung zwischen dem Trägerbauteil und der Sichtlippe ausgebildet wird. Die Dichtlippe kann zumindest abschnittsweise als elastisch biegbare Dichtlippe ausgeführt sein.

Zur weiteren Veredelung der Glanzoberfläche kann eine Nachbearbeitung vorgesehen sein, zum Beispiel das Auftragen einer Glanzdeckschicht, beispielsweise in Form einer Lackschicht. Alternativ ist die sichtseitige Leistendeckfläche mit der Glanzoberfläche in einem einstufigen Prozess mittels Spritzgießen abschließend hergestellt.

Die sichtseitige Leistendeckfläche mit der Glanzoberfläche kann wenigstens teilweise als Deckfläche des Trägerbauteils gebildet sein. Die Leistendeckfläche mit der Glanzoberfläche kann die Deckfläche des Trägerbauteils vollständig erfassend gebildet sein.

Auf der Deckfläche des Trägerbauteils kann eine äußere Deckschicht aufgetragen sein, und die sichtseitige Leistendeckfläche mit der Glanzoberfläche kann wenigstens teilweise als Deckfläche der äußeren Deckschicht gebildet sein. Die äußere Deckschicht kann die Deckfläche des Trägerbauteils vollständig erfassend ausgebildet sein. Die äußere Deckschicht und das Trägerbauteil bestehen aus materialverträglichen Werkstoffen, sodass beim Auftragen der äußeren Deckschicht eine haftende Verbindung zur Deckfläche des Trägerbauteils entsteht.

Die äußere Deckschicht kann eine spritzgegossene äußere Deckschicht sein. Bei dieser Ausführungsform wird die äußere Deckschicht mittels Spritzgießen auf der Deckfläche des Trägerbauteils hergestellt, sodass die sichtseitige Glanzoberfläche in einem einstufigen Herstellungsprozess beim Herstellen der spritzgegossenen Wasserablaufleiste gebildet wird. Hierbei kann vorgesehen sein, dass in einem Spritzgusswerkzeug zunächst die äußere Deckschicht mit der Glanzfläche in einer Werkzeugkavität spritzgegossen wird. Anschließend werden das Trägerbauteil und die Dichtlippe mittels Spritzgießen hergestellt. Es kann vorgesehen sein, dies in einer weiteren Kavität des Spritzgusswerkzeuges auszuführen. Alternativ kann vorgesehen sein, die Werkzeugkavität, welche zumindest zum Herstellen Deckschicht genutzt wurde, mittels Bauteilverlagerung zu erweitern, um eine Kavitätserweiterung für das Herstellen des Trägerbauteils und / oder der Dichtlippe zu schaffen.

Die Dichtlippe kann aus einem Kunststoffmaterial sein, welches weicher ist als ein Kunststoffmaterial, aus dem das Trägerbauteil besteht. Das Kunststoffmaterial für die Dichtlippe kann ein elastisch verformbares Material sein, beispielsweise ein TPE (thermoplastisches Elastomer).

Ein Grundkörper des Trägerbauteils kann zumindest abschnittsweise im Querschnitt T-förmig ausgebildet sein. Die im Querschnitt T-förmige Ausbildung kann beispielsweise wenigstens in einem mittleren Abschnitt der Wasserablaufleiste vorgesehen sein. Im T-förmig ausgebildeten Abschnitt kann die Deckfläche des Trägerbauteils auf einem querstehenden Dachabschnitt gebildet sein. Die Dichtlippe kann an einem aufrechten Basisabschnitt angeformt sein.

Das Trägerbauteil und / oder die Deckschicht können aus einem synthetischen thermoplastischen Kunststoff sein. Als synthetischer thermoplastischer Kunststoff kann PMMA (Polymethylmethacrylat) eingesetzt werden. Eine Einfärbung des Kunststoffmaterials kann vorgesehen sein.

Das Trägerbauteil und die hierauf angeordnete äußere Deckschicht können aus demselben Kunststoffmaterial sein. Alternativ können unterschiedliche Kunststoffmaterialien verwendet werden.

Das Trägerbauteil kann einen Befestigungsabschnitt aufweisen. Der Befestigungsabschnitt kann als Einsteckabschnitt ausgebildet sein, welcher beim Befestigen der Wasserablaufleiste an der Fahrzeugverkleidung in eine zugeordnete Aufnahme eingesteckt wird, zum Beispiel eine Federaufnahme. Hierdurch kann eine lösbare oder nichtlösbare Befestigung vorgesehen sein.

Bei der Anordnung für die Fahrzeugverkleidung kann das Fahrzeugverkleidungsbauteil benachbart zu einem weiteren Fahrzeugverkleidungsbauteil angeordnet sein, und eine Dichtlippe, die bei der spritzgegossenen Wasserablaufleiste an das Trägerbauteil angespritzt ist, kann auf dem weiteren Fahrzeugverkleidungsbauteil aufliegen, derart, dass eine außenliegende Wasserablaufrinne gebildet ist. Die Dichtlippe kann einen abgewinkelten Abschnitt aufweisen, beispielsweise der Art, dass der abgewinkelte Abschnitt auf dem weiteren Verkleidungsbauteil flächig aufliegt. Bei dieser oder anderen Ausführungsformen kann es sich bei dem weiteren Verkleidungsbauteil um eine Scheibe eines Fahrzeugs handeln, beispielsweise die Frontscheibe. Die Abdichtung der Dichtlippe kann auch seitlich der Frontscheibe erfolgen.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Wasserablauf- oder Wasserfangleiste für eine Fahrzeugverkleidung in Vorderansicht und Draufsicht;
- Fig. 2: eine Schnittdarstellung der Wasserablaufleiste entlang eines Schnitts AA in Fig. 1;
- Fig. 3: eine Schnittdarstellung der Wasserablaufleiste entlang eines Schnitts BB in Fig. 1;
- Fig. 4: eine Schnittdarstellung der Wasserablaufleiste entlang eines Schnitts CC in Fig. 1;
- Fig. 5: eine schematische Schnittdarstellung einer Anordnung für eine Fahrzeugverkleidung mit einer Wasseraufnahmeleiste und
- Fig. 6: eine weitere schematische Schnittdarstellung einer Anordnung für eine Fahrzeugverkleidung mit einer Wasseraufnahmeleiste.

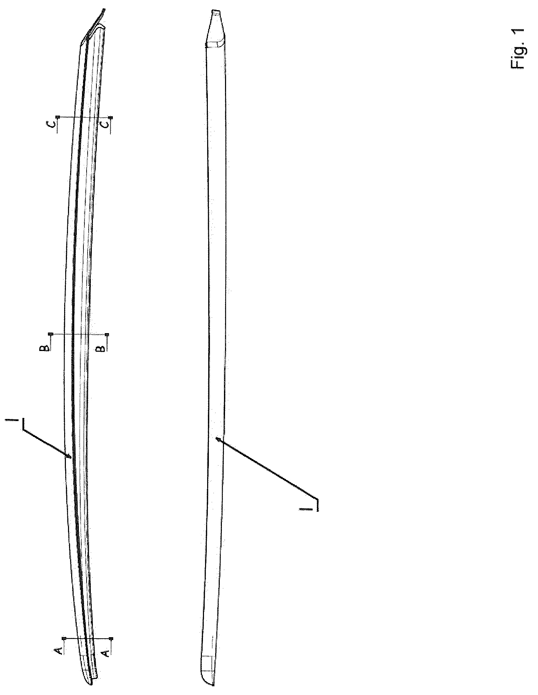

Fig. 1 zeigt eine schematische Darstellung einer Wasserablaufleiste 1 für eine Fahrzeugverkleidung, die auch als Wasserfangleiste bezeichnet werden kann. Es sind eine Vorderansicht sowie eine Draufsicht dargestellt.

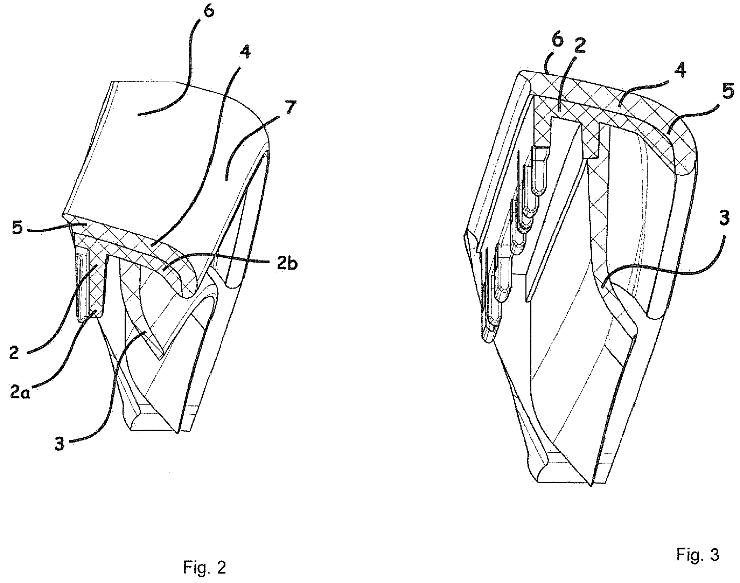

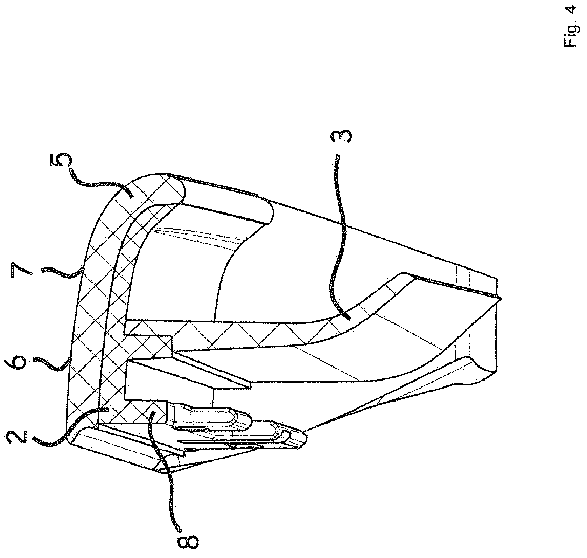

Die Fig. 2 bis 4 zeigen vergrößerte Schnittdarstellungen der Wasserablaufleiste aus Fig. 1 entlang der AA-, BB-, sowie CC-Schnitte in Fig. 1.

Die Wasserablaufleiste 1 wird mittels Spritzgießen in einem einstufigen Herstellungsprozess in einem Spritzgusswerkzeug hergestellt. Die spritzgegossene Wasserablaufleiste 1 weist gemäß den Fig. 2 bis 4 ein Trägerbauteil 2 auf, was beim Spritzgießen aus einem synthetischen thermoplastischen Kunststoff hergestellt wird, wobei zum Beispiel der Werkstoff PMMA (Polymethylmethacrylat) verwendet werden kann. Gemäß Fig. 2 weist das Trägerbauteil 2 in einem Abschnitt eine T-förmige Ausbildung auf mit einem aufrechten Basisabschnitt 2a und einem querstehenden Dachabschnitt 2b.

An das Trägerbauteil 2 ist mittels Spritzgießen einstückig eine Dichtlippe 3 angeformt. Die Dichtlippe 3 wird aus einer Weichkomponente hergestellt, insbesondere einem Kunststoffmaterial, welches weicher ist als das Kunststoffmaterial des Trägerbauteils 2. Zum Beispiel kann die Dichtlippe 3 aus einem thermoplastischen Elastomer sein.

Auf einer Deckfläche 4 des Trägerbauteils 2 ist bei dem dargestellten Ausführungsbeispiel eine äußere Deckschicht 5 mittels Spritzgießen aufgebracht. Die äußere Deckschicht 5 und das Trägerbauteil 2 sind aus materialverträglichen Kunststoffen, sodass beim Aufspritzen der äußeren Deckschicht 5 eine haftende Verbindung zum Trägerbauteil 2 entsteht. In einer Ausführung können das Trägerbauteil 2 und die äußere Deckschicht 5 aus demselben Kunststoffmaterial bestehen, beispielsweise einem synthetischen thermoplastischen Kunststoff wie PMMA. Es können auch die Materialpassagen ABS (2) und PMMA (5) oder PC (5) verwendet werden (ABS - Acrylnitril Butadien Styrol, PC - Poly Carbonat).

Bei dem gezeigten Ausführungsbeispiel in den Fig. 1 bis 4 wird eine sichtseitige Leistendeckfläche 6 von einer Deckfläche 7 der äußeren Deckschicht 5 gebildet. Die sichtseitige Leistendeckfläche 6 ist als Glanzoberfläche hergestellt, beispielsweise auch als Hochglanzfläche.

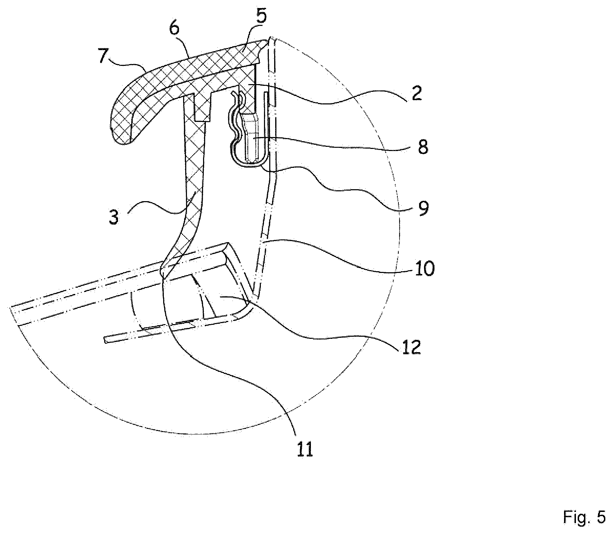

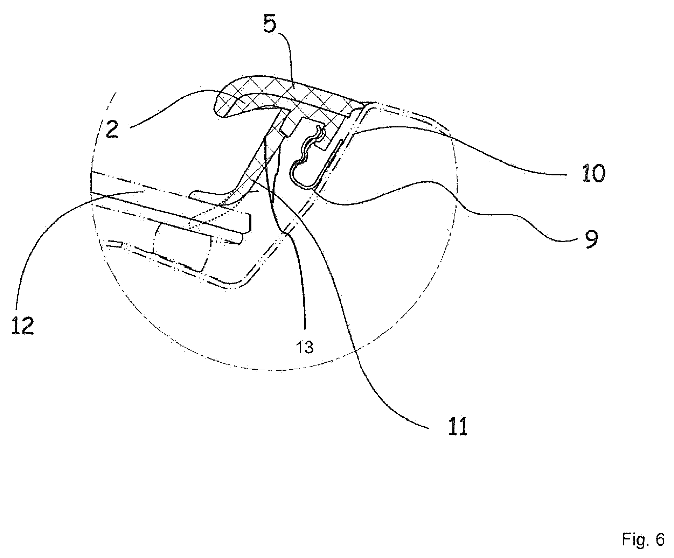

An dem Trägerbauteil 2 ist ein Befestigungsabschnitt 8 ausgebildet, welcher bei der Montage der Wasserablaufleiste 1 an einer Fahrzeugverkleidung (vgl. hierzu auch Fig. 5 und 6) zur Befestigung dient, beispielsweise mittels einstecken des Befestigungsabschnitts 8 in eine zugeordnete Steckaufnahme.

Die Fig. 5 und 6 zeigen schematische Schnittdarstellungen einer Anordnung für eine Fahrzeugverkleidung mit der Wasseraufnahmeleiste 1 in alternativer Bauform. Für dieselben Merkmale werden in den Fig. 5 und 6 die gleichen Bezugszeichen wie in den Fig. 1 bis 4 verwendet. Die Wasseraufnahmeleiste 1 ist mit Hilfe einer Befestigungseinrichtung 9 an einem Fahrzeugverkleidungsbauteil 10 befestigt, indem der Befestigungsabschnitt 8 eingesteckt ist. Die Dichtlippe 3 liegt mit einem unteren Abschnitt 11 auf einer Frontscheibe 12 auf und ist mehr oder weniger abgewinkelt. Die Abdichtung der Dichtlippe kann auch seitlich der Frontscheibe erfolgen, was in Fig. 6 mittels Bezugszeichen 13 schematisch gezeigt ist.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Spritzgegossene Wasserablaufleiste (1) für eine Fahrzeugverkleidung, mit einem spritzgegossenem Trägerbauteil (2) und einer Dichtlippe (3), die an das Trägerbauteil (2) angespritzt ist, wobei eine sichtseitige Leistendeckfläche (6) mit einer Glanzoberfläche gebildet ist.

2. Wasserablaufleiste (1) nach Anspruch 1, **dadurch gekennzeichnet, dass** die sichtseitige Leistendeckfläche (6) mit der Glanzoberfläche wenigstens teilweise als Deckfläche (4) des Trägerbauteils (2) gebildet ist.

3. Wasserablaufleiste (1) nach Anspruch 1 oder 2, **dadurch gekennzeichnet, dass** auf der Deckfläche (4) des Trägerbauteils (2) eine äußere Deckschicht (5) aufgetragen ist und die sichtseitige Leistendeckfläche (6) mit der Glanzoberfläche wenigstens teilweise als Deckfläche (7) der äußeren Deckschicht (5) gebildet ist.

4. Wasserablaufleiste (1) nach Anspruch 2, **dadurch gekennzeichnet, dass** die äußere Deckschicht (5) eine spritzgegossene äußere Deckschicht ist.

5. Wasserablaufleiste (1) nach mindestens einem der vorangehenden Ansprüche, **dadurch gekennzeichnet, dass** die Dichtlippe (3) aus einem Kunststoffmaterial ist, welches weicher ist als ein Kunststoffmaterial, aus dem das Trägerbauteil (2) besteht.

6. Wasserablaufleiste (1) nach mindestens einem der vorangehenden Ansprüche, **dadurch gekennzeichnet, dass** ein Grundkörper des Trägerbauteils (2) zumindest abschnittsweise im Querschnitt T-förmig ausgebildet ist.

7. Wasserablaufleiste (1) nach mindestens einem der vorangehenden Ansprüche, **dadurch gekennzeichnet, dass** das Trägerbauteil (2) aus einem synthetischen thermoplastischen Kunststoff ist.

8. Wasserablaufleiste (1) nach mindestens einem der vorangehenden Ansprüche, soweit auf Anspruch 3 rückbezogen, **dadurch gekennzeichnet, dass** die äußere Deckschicht (5) aus einem synthetischen thermoplastischen Kunststoff ist.

9. Wasserablaufleiste (1) nach mindestens einem der vorangehenden Ansprüche, soweit auf Anspruch 3 rückbezogen, **dadurch gekennzeichnet, dass** das Trägerbauteil (2) und die hierauf angeordnete äußere Deckschicht (5) aus demselben Kunststoffmaterial sind.

10. Wasserablaufleiste (1) nach mindestens einem der vorangehenden Ansprüche, **dadurch gekennzeichnet, dass** das Trägerbauteil (2) einen Befestigungsabschnitt (8) aufweist.

11. Anordnung für eine Fahrzeugverkleidung, mit
- einer spritzgegossenen Wasserablaufleiste (1) nach mindestens einem der vorangehenden Ansprüche,
- einem Fahrzeugverkleidungsbauteil (10) und
- einem Befestigungsbauteil (9), mit dem die spritzgegossene Wasserablaufleiste (1) an dem Fahrzeugverkleidungsbauteil (10) befestigt ist, derart, dass eine Glanzoberfläche einer Leistendeckfläche (6) der spritzgegossenen Wasserablaufleiste (1) sichtseitig angeordnet ist.

12. Anordnung nach Anspruch 11, **dadurch gekennzeichnet, dass** das Fahrzeugverkleidungsbauteil (10) benachbart zu einem weiteren Fahrzeugverkleidungsbauteil (12) angeordnet ist und eine Dichtlippe (3), die bei der spritzgegossenen Wasserablaufleiste (1) an das Trägerbauteil (2) angespritzt ist, auf dem weiteren Fahrzeugverkleidungsbauteil (12) aufliegt, derart, dass eine außenliegende Wasserablaufrinne gebildet ist.
